(19) Europäisches Patentamt
European Patent Office
Office européen des brevets

(11) EP 2 520 614 A1

(12) EUROPEAN PATENT APPLICATION
published in accordance with Art. 153(4) EPC

(43) Date of publication:
**07.11.2012 Bulletin 2012/45**

(21) Application number: **11840253.6**

(22) Date of filing: **08.11.2011**

(51) Int Cl.:
***C08L 9/06*** *(2006.01)* ***B60C 1/00*** *(2006.01)*
***C08F 236/10*** *(2006.01)* ***C08K 3/36*** *(2006.01)*
***C08K 5/36*** *(2006.01)* ***C08L 15/00*** *(2006.01)*

(86) International application number:
**PCT/JP2011/075667**

(87) International publication number:
**WO 2012/063797 (18.05.2012 Gazette 2012/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2010 JP 2010251058**

(71) Applicant: **Sumitomo Rubber Industries, Ltd.**
**Kobe-shi, Hyogo 651-0072 (JP)**

(72) Inventors:
- **MINAGOSHI Akira**
  **Kobe-shi**
  **Hyogo 651-0072 (JP)**
- **UESAKA Kenichi**
  **Kobe-shi**
  **Hyogo 651-0072 (JP)**

(74) Representative: **Manitz, Finsterwald & Partner GbR**
**Martin-Greif-Strasse 1**
**80336 München (DE)**

## (54) RUBBER COMPOSITION FOR TIRES, AND PNEUMATIC TIRE

(57) The present invention provides a rubber composition for a tire which can achieve both high levels of fuel economy and abrasion resistance, as well as excellent wet grip performance; and a pneumatic tire produced using the rubber composition. The rubber composition for a tire includes a rubber component that includes 5% by mass or more of a modified styrene butadiene rubber containing a constitutional unit derived from a specific nitrogen-containing compound in a main chain, based on 100% by mass of the rubber component; silica; and a compound represented by the following formula (I):

$$R^{20}\text{-S-S-A-S-S-}R^{21} \qquad \text{(I)}$$

wherein A represents a C2 to C10 alkylene group, and $R^{20}$ and $R^{21}$ are the same as or different from each other, each representing a monovalent organic group that contains a nitrogen atom.

EP 2 520 614 A1

## Description

TECHNICAL FIELD

The present invention relates to a rubber composition for a tire, and a pneumatic tire using the same.

BACKGROUND ART

The fuel economy of cars has been improved by decreasing the rolling resistance (improving the performance in terms of rolling resistance) of tires. In recent years, the demand for good fuel economy of cars has increasingly risen, which has led to the demand for very low heat build-up (excellent fuel economy) of rubber compositions used for producing tires.

A known method for improving the fuel economy of a rubber composition is a method of reducing the amount of reinforcing filler. However, in this case, the hardness of the rubber composition can be decreased to cause a decrease in handling performance (handling stability), and the strength of the rubber composition can be decreased to cause a decrease in abrasion resistance.

Another known method for improving the fuel economy of a rubber composition is a method of substituting silica for carbon black as a reinforcing filler. However, silica, having a hydrophilic silanol group on its surface, has lower compatibility with rubber (for example, particularly, natural rubber, butadiene rubber, and styrene butadiene rubber which are often used for tires) compared with carbon black, and is thus inferior in terms of abrasion resistance and mechanical strength (tensile strength and elongation at break) in some cases.

Patent Literature 1 discloses a rubber composition for a tire which contains both anhydrous silica and hydrous silica and thereby can greatly improve wet grip performance. However, the rubber composition still leaves room for improvement in improving fuel economy and abrasion resistance along with wet grip performance.

CITATION LIST

PATENT LITERATURE

Patent Literature 1: JP 2003-192842 A

SUMMARY OF INVENTION

TECHNICAL PROBLEM

The present invention aims to provide a rubber composition for a tire which solves the above problem and can achieve both high levels of fuel economy and abrasion resistance, as well as excellent wet grip performance; and a pneumatic tire produced using the rubber composition.

SOLUTION TO PROBLEM

The present invention relates to a rubber composition for a tire, including:

a rubber component that includes 5% by mass or more of a modified styrene butadiene rubber containing a constitutional unit derived from a nitrogen-containing compound in a main chain, based on 100% by mass of the rubber component;
silica; and
a compound represented by the following formula (I):

$$R^{20}\text{-}S\text{-}S\text{-}A\text{-}S\text{-}S\text{-}R^{21} \qquad (I)$$

wherein A represents a C2 to C10 alkylene group, and $R^{20}$ and $R^{21}$ are the same as or different from each other, each representing a monovalent organic group that contains a nitrogen atom,
wherein the nitrogen-containing compound is represented by the following formula:

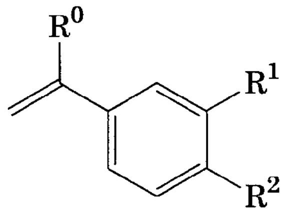

wherein $R^0$ represents hydrogen, a C1 to C30 aliphatic hydrocarbon group, a C3 to C30 alicyclic hydrocarbon group, or a C5 to C30 aromatic hydrocarbon group; $R^1$ and $R^2$ are the same as or different from each other, each representing hydrogen,

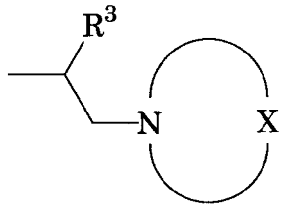

or

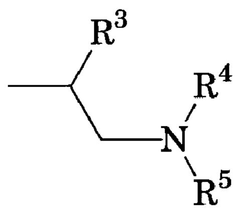

,

provided that at least one of $R^1$ and $R^2$ is not hydrogen; $R^3$ represents hydrogen or a C1 to C4 hydrocarbon group; X represents a divalent saturated hydrocarbon group, may contain nitrogen, oxygen, or sulfur, and may be replaced by

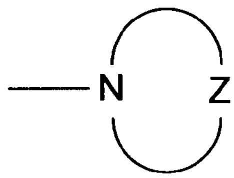

or

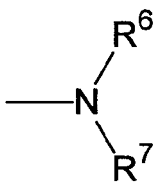

;

Z represents a divalent saturated hydrocarbon group, and may contain nitrogen, oxygen, or sulfur; and $R^4$ to $R^7$ are the same as or different from each other, each representing hydrogen, a C1 to C30 aliphatic hydrocarbon group, a C3 to C30 alicyclic hydrocarbon group, a C5 to C30 aromatic hydrocarbon group, or a heterocyclic group having 3 to 30 ring member atoms.

The rubber composition is preferably used for a tread.

The present invention also relates to a pneumatic tire produced using the rubber composition.

ADVANTAGEOUS EFFECTS OF INVENTION

The present invention is directed to a rubber composition including a modified styrene butadiene rubber produced using a specific nitrogen-containing compound as a monomer, silica, and a specific compound, and therefore can provide a pneumatic tire that can achieve both high levels of fuel economy and abrasion resistance, as well as excellent wet grip performance.

DESCRIPTION OF EMBODIMENTS

The rubber composition according to the present invention includes:

a rubber component that includes 5% by mass or more of a modified styrene butadiene rubber containing a constitutional unit derived from a nitrogen-containing compound in a main chain;
silica; and
a compound represented by the following formula (I):

$$R^{20}\text{-S-S-A-S-S-}R^{21} \qquad (I)$$

wherein A represents a C2 to C10 alkylene group, and $R^{20}$ and $R^{21}$ are the same as or different from each other, each representing a monovalent organic group that contains a nitrogen atom,
wherein the nitrogen-containing compound is represented by the following formula:

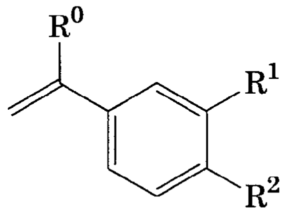

wherein $R^0$ represents hydrogen, a C1 to C30 aliphatic hydrocarbon group, a C3 to C30 alicyclic hydrocarbon group, or a C5 to C30 aromatic hydrocarbon group; $R^1$ and $R^2$ are the same as or different from each other, each representing hydrogen,

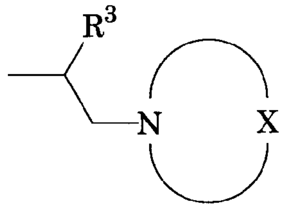

or

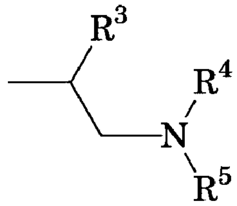

,

provided that at least one of $R^1$ and $R^2$ is not hydrogen; $R^3$ represents hydrogen or a C1 to C4 hydrocarbon group; X represents a divalent saturated hydrocarbon group, may contain nitrogen, oxygen, or sulfur, and may be replaced by

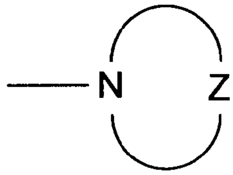

or

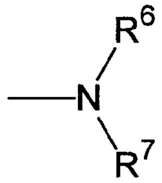

;

Z represents a divalent saturated hydrocarbon group, and may contain nitrogen, oxygen, or sulfur; and $R^4$ to $R^7$ are the same as or different from each other, each representing hydrogen, a C1 to C30 (preferably C1 to C10) aliphatic hydrocarbon group, a C3 to C30 (preferably C3 to C10) alicyclic hydrocarbon group, a C5 to C30 (preferably C5 to C10) aromatic hydrocarbon group, or a heterocyclic group (including an aromatic heterocyclic group) having 3 to 30 (preferably 3 to 10) ring member atoms.

Use of the modified styrene butadiene rubber (modified SBR) enables to disperse silica well in the rubber composition. Moreover, use of the compound represented by the above formula (1) enables the rubber composition to maintain a CC bond with high bond energy and high thermal stability, and therefore favorable rubber strength can be achieved even in the case of using silica. Further, combination use of the modified SBR and the above compound makes it possible to synergistically increase their respective effects. These effects lead to high levels of fuel economy and abrasion resistance, as well as excellent wet grip performance.

The modified styrene butadiene rubber (modified SBR) may be, for example, the modified SBRs mentioned in JP 2010-116545 A and JP 2010-116546 A.

Examples of the saturated hydrocarbon group represented by X include groups represented by $(CR^8R^9)_1$. Examples of the saturated hydrocarbon group represented by X and containing nitrogen, oxygen, or sulfur include $(CR^{10}R^{11}{}_m$-$NR^{12}$-$(CR^{13}R^{14})_n$, $(CR^{10}R^{11l})_m$-O-$(CR^{13}R^{14})$ n, and $(CR^{10}R^{11l})_m$-S-$(CR^{13}R^{14})_{n.}$ $R^8$ to $R^{14}$ are the same as or different from each other, each representing hydrogen, a C1 to C30 (preferably C1 to C5) aliphatic hydrocarbon group, a C3 to C30 (preferably C3 to C10) alicyclic hydrocarbon group, or a C5 to C30 (preferably C5 to C10) aromatic hydrocarbon group. "1" represents an integer of 3 to 10 (preferably 3 to 7). Multiple $(CR^8R^9)$s may be the same as or different from each other. "m" and "n" each represent an integer of 1 to 9 (preferably 1 to 6). In the case that m is 2 or greater, the multiple $(CR^{10}R^{11})$ s may be the same as or different from each other, and in the case that n is 2 or greater, the multiple $(CR^{13}R^{14})$ s may be the same as or different from each other.

As examples of the saturated hydrocarbon group represented by Z and of such a saturated hydrocarbon group containing nitrogen, oxygen, or sulfur, mention may be made of the same compounds as those mentioned for the saturated hydrocarbon group represented by X.

For favorable dispersion of silica, $R^0$ is preferably hydrogen or a C1 or C2 aliphatic hydrocarbon group. $R^3$ is preferably hydrogen or a C1 or C2 hydrocarbon group. $R^4$ to $R^7$ each are preferably an aliphatic hydrocarbon group, an aromatic hydrocarbon group, or a heterocyclic group, and more preferably an aliphatic hydrocarbon group. $R^8$ to $R^{14}$ each are preferably hydrogen or a C1 or C2 aliphatic hydrocarbon group.

The modified SBR is a copolymer produced by copolymerizing styrene, butadiene (1,3-butadiene), and a nitrogen-containing compound (monomer) represented by the above formula, and contains a constitutional unit derived from the nitrogen-containing compound in the main chain portion. Here, the "main chain portion" encompasses the terminals.

Examples of the nitrogen-containing compound represented by the above formula include 3- or 4-(2-azetidinoethyl)styrene, 3- or 4-(2-pyrrolidinoethyl)styrene, 3- or 4-(2-piperidinoethyl)styrene, and 3- or 4-(2-hexamethyleneiminoethyl)styrene. Each of these may be used alone, or two or more of these may be used in combination. Among these, 3- or 4-(2-pyrrolidinoethyl)styrene is preferred in terms of more favorable dispersion of silica.

The modified SBR preferably has at least one terminal modified by a modifier that contains a functional group containing at least one selected from the group consisting of nitrogen, oxygen, and silicon, and more preferably has both terminals modified by the modifier. Thereby, the performance properties can be more improved.

Examples of the functional group contained in the modifier include amino, amide, alkoxysilyl, isocyanate, imino, imidazole, urea, ether, carbonyl, carboxyl, hydroxyl, nitrile, and pyridyl. Preferred among these are amino and alkoxysilyl groups. Examples of the modifier include 3-(N,N-dimethylamino)propyltrimethoxysilane, 3-(N,N-diethylamino)propyltrimethoxysilane, 3-(N,N-dimethylamino)propyltriethoxysilane, 3-(N,N-diethylamino)propyltriethoxysilane, 3-glycidoxypropyltrimethoxysilane, 2-(4-pyridylethyl)triethoxysilane, N-(3-triethoxysilylpropyl)-4,5-dihydroimidazole, and silicon tetrachloride. Preferred among these is 3-(N,N-dimethylamino)propyltrimethoxysilane.

The amount of the nitrogen-containing compound in the modified SBR is preferably 0.05% by mass or more, and more preferably 0.1% by mass or more. An amount of less than 0.05% by mass is less likely to contribute to improvement of fuel economy and wet grip performance. The amount of the nitrogen-containing compound in the modified SBR is preferably 10% by mass or less, and more preferably 5% by mass or less. An amount of more than 10% by mass is less likely to produce effects commensurate with the increased cost.
The amount of the nitrogen-containing compound described herein is measured by the method described later in the EXAMPLES.

The amount of the modified SBR in 100% by mass of the rubber component is 5% by mass or more, preferably 35% by mass or more, more preferably 55% by mass or more, and still more preferably 65% by mass or more. An amount of less than 5% by mass is less likely to be sufficient to exert the effects of the modified SBR. The amount of the modified SBR is preferably 90% by mass or less, more preferably 80% by mass or less, and still more preferably 75% by mass or less. An amount of more than 90% by mass tends to deteriorate the processability.

The rubber composition of the present invention containing the modified SBR may also contain other rubbers. Examples of the other rubbers include diene rubbers such as natural rubber (NR), isoprene rubber (IR), and butadiene rubber (BR). Each of these may be used alone, or two or more of these may be used in combination. Among these, NR is preferred in terms of favorable fuel economy and favorable tensile strength at break.
The NR is not particularly limited, and ones generally used in the tire industry may be used.

The amount of NR in 100% by mass of the rubber component is preferably 10% by mass or more, more preferably 20% by mass or more, and still more preferably 25% by mass or more. An amount of less than 10% by mass is less likely to be sufficient to exert the effects of NR. The amount of NR is preferably 50% by mass or less, more preferably 40% by mass or less, and still more preferably 35% by mass or less. An amount of more than 50% by mass corresponds to a reduction of the amount of the modified SBR, thereby tending to cause deterioration of the dispersibility of silica.

The silica may be one generally used in the tire industry, such as dry silica (anhydrous silica) and wet silica (hydrous silica). Each of these may be used alone, or two or more of these may be used in combination.
The silica is preferably used in combination with a known silane coupling agent.

The nitrogen adsorption specific surface area ($N_2SA$) of silica is preferably 100 $m^2/g$ or larger, and more preferably 150 $m^2/g$ or larger. An $N_2SA$ of smaller than 100 $m^2/g$ tends to result in a small reinforcing effect, deteriorating the abrasion resistance. The $N_2SA$ of silica is preferably 300 $m^2/g$ or smaller, and more preferably 200 $m^2/g$ or smaller. An $N_2SA$ of larger than 300 $m^2/g$ tends to decrease the dispersibility of silica, deteriorating the fuel economy.
The $N_2SA$ of silica is measured by the BET method according to ASTM D3037-81.

The amount of silica is preferably 50 parts by mass or more, and more preferably 65 parts by mass or more, for each 100 parts by mass of the rubber component. An amount of less than 50 parts by mass may not lead to sufficient wet grip performance and sufficient abrasion resistance. The amount of silica is preferably 150 parts by mass or less, and more preferably 100 parts by mass or less. An amount of more than 150 parts by mass tends to lead to lower dispersibility of silica, deteriorating the fuel economy.

The present invention employs a compound represented by the following formula (I). This enables the rubber composition to maintain a CC bond with high bond energy and high thermal stability, and therefore the abrasion resistance can be improved while favorable fuel economy is maintained.

$$R^{2o}\text{-S-S-A-S-S-}R^{21} \qquad (I)$$

In formula (I), A represents a C2 to C10 alkylene group, and $R^{20}$ and $R^{21}$ are the same as or different from each other, each representing a monovalent organic group that contains a nitrogen atom.

Examples of the (C2 to C10) alkylene group for A include, but not particularly limited to, linear, branched, and cyclic alkylene groups. Among these, linear alkylene groups are preferred. The carbon number is preferably 4 to 8. Alkylene groups with a carbon number of 1 are less likely to be thermally stable, and thus they tend not to result in the expected effect of inclusion of an alkylene group. Meanwhile, alkylene groups with a carbon number of 11 or greater are likely to bring difficulties in the formation of a crosslinking chain represented by -S-S-A-S-S-.

Examples of alkylene groups satisfying the above conditions include ethyelene, trimethylene, tetramethylene, pentamethylene, hexamethylene, heptamethylene, octamethylene, and decamethylene. Among these, hexamethylene is preferred in terms of smooth formation of the crosslinking chain represented by -S-S-A-S-S- between the polymers,

and of thermal stability.

$R^{20}$ and $R^{21}$ are not particularly limited as long as each of these is a monovalent organic group containing a nitrogen atom. $R^{20}$ and $R^{21}$ each preferably contain at least one aromatic ring, and more preferably further contain a linking group represented by N-C(=S)- in which the carbon atom is bonded to a dithio group. $R^{20}$ and $R^{21}$ may be the same as or different from each other, and are preferably the same as each other for reasons such as easiness in the production.

Examples of the compound represented by formula (I) include 1,2-bis(N,N'-dibenzylthiocarbamoyldithio)ethane, 1,3-bis(N,N'-dibenzylthiocarbamoyldithio)propane, 1,4-bis(N,N'-dibenzylthiocarbamoyldithio)butane, 1,5-bis(N,N'-dibenzylthiocarbamoyldithio)pentane, 1,6-bis(N,N'-dibenzylthiocarbamoyldithio)hexane, 1,7-bis(N,N'-dibenzylthiocarbamoyldithio)heptane, 1,8-bis(N,N'-dibenzylthiocarbamoyldithio)octane, 1,9-bis(N,N'-dibenzylthiocarbamoyldithio)nonane, and 1,10-bis(N,N'-dibenzylthiocarbamoyldithio)decane. Among these, 1,6-bis(N,N'-dibenzylthiocarbamoyldithio) hexane is preferred for reasons that it is thermally stable and excellent in polarization properties.

The amount of the compound represented by formula (I) is preferably 1 part by mass or more, more preferably 4 parts by mass or more, and still more preferably 6 parts by mass or more, for each 100 parts by mass of the rubber component. An amount of less than 1 part by mass may not be sufficient to exert the effects of the compound. The amount of the compound represented by formula (I) is preferably 12 parts by mass or less, more preferably 10 parts by mass or less, and still more preferably 8 parts by mass or less. An amount of more than 12 parts by mass may decrease the flexibility of the rubber composition, deteriorating the abrasion resistance.

The present invention usually employs sulfur together with the compound represented by formula (I), as vulcanizing agents (crosslinking agents).
Examples of the sulfur include powdered sulfur, precipitated sulfur, colloidal sulfur, insoluble sulfur, and highly dispersible sulfur.

The amount of sulfur is preferably 1 part by mass or more, more preferably 1.5 parts by mass or more, and still more preferably 1.8 parts by mass or more, for each 100 parts by mass of the rubber component. An amount of less than 1 part by mass may result in a reduced curing rate, deteriorating the productivity. The amount of sulfur is preferably 4 parts by mass or less, more preferably 3 parts by mass or less, and still more preferably 2 parts by mass or less. An amount of more than 4 parts by mass is likely to increase the proportion of sulfur crosslinking in the rubber composition, causing a reduction of the effects of use of the compound represented by formula (I).

In the case that the rubber composition of the present invention includes sulfur, the total amount of sulfur and the compound represented by formula (I) is preferably 2 parts by mass or more, more preferably 6 parts by mass or more, and still more preferably 8 parts by mass or more, for each 100 parts by mass of the rubber component. The total amount is preferably 16 parts by mass or less, more preferably 12 parts by mass or less, and still more preferably 10 parts by mass or less. If the total amount is in the above range, a well crosslinked structure can be efficiently formed.

The rubber composition of the present invention may appropriately include compounding ingredients generally used in the production of rubber compositions, in addition to the above ingredients. Examples of the compounding ingredients include carbon black, zinc oxide, stearic acid, various antioxidants, oil, wax, and vulcanization accelerators.

The rubber composition of the present invention preferably contains carbon black. Thereby, favorable reinforcement is achieved, and thus the abrasion resistance can be further improved.
The carbon black is not particularly limited, and ones generally used in the tire industry may be used.

The nitrogen adsorption specific surface area ($N_2SA$) of carbon black is preferably 50 $m^2/g$ or larger, and more preferably 100 $m^2/g$ or larger. An $N_2SA$ of smaller than 50 $m^2/g$ is less likely to result in sufficient reinforcement. The $N_2SA$ of carbon black is preferably 200 $m^2/g$ or smaller, and more preferably 150 $m^2/g$ or smaller. An $N_2SA$ of larger than 200 $m^2/g$ is likely to deteriorate fuel economy.
The nitrogen adsorption specific surface area of carbon black is a value measured by the method A of JIS K6217.

The amount of carbon black is preferably 5 parts by mass or more, and more preferably 8 parts by mass or more, for each 100 parts by mass of the rubber component. An amount of less than 5 parts by mass may not be sufficient to exert the effects of carbon black. The amount of carbon black is preferably 20 parts by mass or less, and more preferably 15 parts by mass or less. An amount of more than 20 parts by mass tends to deteriorate fuel economy.

The total amount of carbon black and silica in the rubber composition of the present invention is preferably 55 parts by mass or more, and more preferably 75 parts by mass or more, for each 100 parts by mass of the rubber component. The total amount is preferably 170 parts by mass or less, and more preferably 100 parts by mass or less. If the total amount is in the above range, excellent abrasion resistance can be achieved. Since the rubber composition of the present invention includes the modified SBR and the compound represented by formula (I) in combination, favorable fuel economy can be achieved even without reducing the usual amount of filler.

The proportion of silica to 100% by mass in total of silica and carbon black is preferably 30% by mass or more, more preferably 60% by mass or more, and still more preferably 80% by mass or more, and is preferably 95% by mass or less, and more preferably 90% by mass or less. If the proportion is in the above range, the effects of the present invention can be favorably achieved.

The method of producing the rubber composition of the present invention may be a known method, and examples thereof include a method of kneading the above-mentioned ingredients with a rubber kneader such as a Banbury mixer or an open roll mill.

The rubber composition of the present invention can be used for any of tire components, and can be particularly suitably used for treads (especially cap tread).

The rubber composition of the present invention can be used to produce the pneumatic tire of the present invention by a usual method. That is, the pneumatic tire can be produced by preparing a tire component such as a tread from the rubber composition, assembling the tire component and other components, and heating under pressure the assembly in a tire building machine.

The pneumatic tire of the present invention can be suitably used for passenger cars, trucks/buses, two-wheeled vehicles, race vehicles, and the like. It is particularly suitably used for passenger cars among these.

## EXAMPLES

Hereinafter, the present invention will be described in more detail based on the examples which, however, are not intended to limit the scope of the present invention.

In the following, the chemical agents used in synthesis of monomer (1) are listed.

Cyclohexane: product of Kanto Chemical Co., Inc.
Pyrrolidine: product of Kanto Chemical Co., Inc.
Divinylbenzene: product of Sigma-Aldrich Japan K.K. 1.6 M solution of n-butyllithium in hexane: product of Kanto Chemical Co., Inc.
Isopropanol: product of Kanto Chemical Co., Inc.

Preparation 1 (synthesis of monomer (1))

A 100-ml vessel in which the air was sufficiently replaced by nitrogen was charged with 50 ml of cyclohexane, 4.1 ml (3.6 g) of pyrrolidine, and 6.5 g of divinylbenzene. To the mixture was further added 0.7 ml of a 1.6 M solution of n-butyllithium in hexane at 0°C, and the mixture was stirred.
After one hour, isopropanol was added to the mixture to terminate the reaction. The resulting mixture was subjected to extraction and purification, and thereby monomer (1) was obtained.

In the following, the chemical agents used in syntheses of polymers (1) and (2) are listed.

Cyclohexane: product of Kanto Chemical Co., Inc.
Styrene: product of Kanto Chemical Co., Inc.
Butadiene: product of Takachiho Chemical Industrial Co., Ltd.
Tetramethylethylenediamine: product of Kanto Chemical Co., Inc.
1.6 M solution of n-butyllithium in hexane: product of Kanto Chemical Co., Inc.
Terminal modifier: 3-(N,N-dimethylamino)propyltrimethoxysilane, product of AZmax Co., Ltd.
Isopropanol: product of Kanto Chemical Co., Inc.
2,6-di-tert-butyl-p-cresol: NOCRAC 200, product of Ouchi Shinko Chemical Industrial Co., Ltd.
Methanol: product of Kanto Chemical Co., Inc.

Preparation 2 (synthesis of polymer (1))

A 1000-ml pressure-resistant vessel in which the air was sufficiently replaced by nitrogen was charged with 600 ml of cyclohexane, 12.6 ml (11.4 g) of styrene, 71.0 ml (41.0 g) of butadiene, 0.29 g of monomer (1), and 0.11 ml of tetramethylethylenediamine. To the mixture was further added 0.2 ml of a 1.6 M solution of n-butyllithium in hexane at 40°C, and the mixture was stirred.
After three hours, 3 ml of isopropanol was added to the mixture to terminate the polymerization. An amount of 1 g of 2,6-di-tert-butyl-p-cresol was added to the reaction solution. Then, the reaction solution was subjected to reprecipitation with methanol, and then heated and dried, so that polymer (1) was obtained.

Preparation 3 (synthesis of polymer (2))

A 1000-ml pressure-resistant vessel in which the air was sufficiently replaced by nitrogen was charged with 600 ml of cyclohexane, 12.6 ml (11.4 g) of styrene, 71.0 ml (41.0 g) of butadiene, 0.29 g of monomer (1), and 0.11 ml of tetramethylethylenediamine. To the mixture was further added 0.2 ml of a 1.6 M solution of n-butyllithium in hexane

at 40°C, and the mixture was stirred.
After three hours, 0.5 ml (0.49 g) of 3-(N,N-dimethylaminopropyl)trimethoxysilane (modifier) was added to the mixture, and the resulting mixture was stirred.
After one hour, 3 ml of isopropanol was added to the mixture to terminate the polymerization. An amount of 1 g of 2,6-di-tert-butyl-p-cresol was added to the reaction solution. Then, the reaction solution was subjected to reprecipitation with methanol, and heated and dried, so that polymer (2) was obtained.

(Measurement of weight average molecular weight Mw of polymer)

The weight average molecular weight, Mw, of the polymer was determined with a gel permeation chromatograph (GPC) (GPC-8000 series, product of Tosoh Corporation, detector: differential refractometer, column: TSKGEL SUPERMULTIPORE HZ-M, product of Tosoh Corporation) and calibrated with polystyrene standards.

(Measurement of amount of nitrogen-containing compound in polymer)

The amount of the nitrogen-containing compound in the polymer (the amount of monomer (1)) was determined using a device of the JNM-ECA series by JEOL Ltd.
The chemical agents used in Examples and Comparative Examples are listed below.

SBR: E15, product of Asahi Kasei Chemicals Corporation
Polymer (1): main chain-modified SBR (produced in Preparation 2, Mw: $3.0 \times 10^5$, amount of monomer (1) :1.0% by mass)
Polymer (2): main chain- and terminal-modified SBR (produced in Preparation 3, Mw: $3.0 \times 10^5$, amount of monomer (1): 1.0% by mass)
NR: RSS#3
Silica: ULTRASIL VN3 ($N_2SA$: 175 $m^2/g$), product of Evonik Degussa
Carbon black: DIABLACK N220 ($N_2SA$: 114 $m^2/g$), product of Mitsubishi Chemical Corporation
Silane coupling agent: Si69 (bis(3-triethoxysilylpropyl)tetrasulfide), product of Evonik Degussa
Zinc oxide: zinc oxide #1, product of Mitsui Mining & Smelting Co., Ltd.
Stearic acid: stearic acid "Tsubaki," product of NOF Corporation
Antioxidant: Antigene 6C (N-(1,3-dimethylbutyl)-N'-phenyl-p-phenylenediamine), product of Sumitomo Chemical Co., Ltd.
Wax: SUNNOC N, product of Ouchi Shinko Chemical Industrial Co., Ltd.
Oil: Process X-140, product of JX Nippon Oil & Energy Corporation
Sulfur: powdered sulfur, product of Karuizawa Iou K.K.
Vulcanization accelerator (1): Nocceler CZ (N-cyclohexyl-2-benzothiazolylsulfenamide), product of Ouchi Shinko Chemical Industrial Co., Ltd.
Vulcanization accelerator (2): Nocceler D (N,N'-diphenylguanidine), product of Ouchi Shinko Chemical Industrial Co., Ltd.
Crosslinking agent: Vulcuren VP KA9188 (1,6-bis (N,N'-dibenzylthiocarbamoyldithio)hexane), product of LANXESS

Examples and Comparative Examples

The materials in amounts shown in Table 1, except the sulfur, the vulcanization accelerators, and the crosslinking agent, were kneaded in a Banbury mixer at 150°C for three minutes, whereby a kneaded mixture was obtained. Thereafter, the sulfur, the vulcanization accelerators, and the crosslinking agent were added to the kneaded mixture, and then the resulting mixture was kneaded with an open roll mill at 50°C for five minutes, so that an unvulcanized rubber composition was obtained. The unvulcanized rubber composition was molded into the shape of a tread, assembled with other tire components to form a tire, and the tire was vulcanized at 170°C for 10 minutes, and thereby a test tire (tire size: 195/65R15) was produced.
The thus obtained test tires were evaluated by the methods described below. Table 1 shows the results.

(Rolling resistance)

The rolling resistance was measured by running the test tire using a rolling resistance tester under the conditions of rim (15 x 6JJ), internal pressure (230 kPa), load (3.43 kN), and speed (80 km/h). The measured value was converted into an index by the following formula. A larger index indicates a lower rolling resistance and better fuel economy.

(Rolling resistance index) = (rolling resistance of Comparative Example 1)/(rolling resistance of each composition) × 100

(Wet grip performance)

A vehicle on which each set of test tires was mounted was run on a wet asphalt road surface, and the braking distance with an initial speed of 100 km/h was measured. The measured value was converted into an index by the following formula. A larger index indicates better wet grip performance (wet skid performance).

(Wet grip performance index) = (braking distance of Comparative Example 1)/(braking distance of each composition) × 100

(Abrasion resistance)

A vehicle on which each set of test tires was mounted was run in a city area, and the running distance needed to decrease the depth of the tire grooves by 1 mm was calculated from the amount of decrease in the depth of grooves after the vehicle had run 8000 km. The calculated value was converted into an index by the following formula. A larger index indicates better abrasion resistance.

(Abrasion resistance index) = (running distance of each composition)/(running distance of Comparative Example 1) × 100

[Table 1]

| | | Comparative Examples | | | | Examples | | |
|---|---|---|---|---|---|---|---|---|
| | | 1 | 2 | 3 | 4 | 1 | 2 | 3 |
| Composition (parts by mass) | SBR | 70 | – | – | 70 | – | – | – |
| | Polymer (1) | – | 70 | – | – | 70 | – | 60 |
| | Polymer (2) | – | – | 70 | – | – | 70 | – |
| | NR | 30 | 30 | 30 | 30 | 30 | 30 | 40 |
| | Silica | 75 | 75 | 75 | 75 | 75 | 75 | 75 |
| | Carbon black | 10 | 10 | 10 | 10 | 10 | 10 | 10 |
| | Silane coupling agent | 6 | 6 | 6 | 6 | 6 | 6 | 6 |
| | Zinc oxide | 3 | 3 | 3 | 3 | 3 | 3 | 3 |
| | Stearic acid | 2 | 2 | 2 | 2 | 2 | 2 | 2 |
| | Antioxidant | 2 | 2 | 2 | 2 | 2 | 2 | 2 |
| | Wax | 2 | 2 | 2 | 2 | 2 | 2 | 2 |
| | Oil | 20 | 20 | 20 | 20 | 20 | 20 | 20 |
| | Sulfur | 2 | 2 | 2 | 2 | 2 | 2 | 2 |
| | Vulcanization accelerator (1) | 1.5 | 1.5 | 1.5 | 1.5 | 1.5 | 1.5 | 1.5 |
| | Vulcanization accelerator (2) | 1.2 | 1.2 | 1.2 | 1.2 | 1.2 | 1.2 | 1.2 |
| | Crosslinking agent | – | – | – | 7 | 7 | 7 | 7 |
| Evaluation | Rolling resistance index | 100 | 110 | 112 | 105 | 120 | 124 | 117 |
| | Wet grip performance index | 100 | 105 | 107 | 101 | 110 | 112 | 107 |
| | Abrasion resistance index | 100 | 102 | 104 | 105 | 112 | 114 | 109 |

Table 1 shows that in the Examples in which a modified SBR including a specific nitrogen-containing compound in a main chain, silica, and KA9188 (compound represented by formula (I)) were used in combination, all the properties of fuel economy, abrasion resistance, and wet grip performance were greatly improved compared with Comparative Example 1. Also, as compared with Comparative Examples 2 to 4 in which either the modified SBR or KA9188 was used, the properties were synergistically improved in the Examples.

## Claims

**1.** A rubber composition for a tire, comprising:

a rubber component that includes 5% by mass or more of a modified styrene butadiene rubber containing a constitutional unit derived from a nitrogen-containing compound in a main chain, based on 100% by mass of the rubber component;
silica; and
a compound represented by the following formula (I):

$$R^{20}\text{-S-S-A-S-S-}R^{21} \qquad \text{(I)}$$

wherein A represents a C2 to C10 alkylene group, and $R^{20}$ and $R^{21}$ are the same as or different from each other, each representing a monovalent organic group that contains a nitrogen atom,
wherein the nitrogen-containing compound is represented by the following formula:

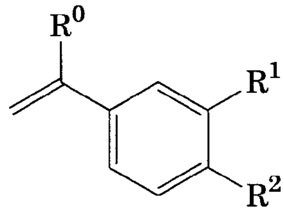

wherein $R^0$ represents hydrogen, a C1 to C30 aliphatic hydrocarbon group, a C3 to C30 alicyclic hydrocarbon group, or a C5 to C30 aromatic hydrocarbon group; $R^1$ and $R^2$ are the same as or different from each other, each representing hydrogen,

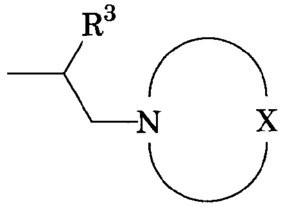

or

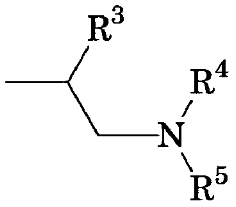

,

provided that at least one of $R^1$ and $R^2$ is not hydrogen; $R^3$ represents hydrogen or a C1 to C4 hydrocarbon group; X represents a divalent saturated hydrocarbon group, may contain nitrogen, oxygen, or sulfur, and may be replaced by

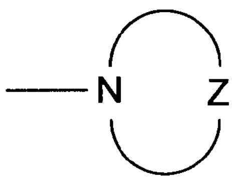

or

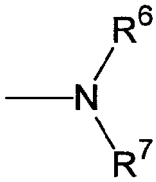

;

Z represents a divalent saturated hydrocarbon group, and may contain nitrogen, oxygen, or sulfur; and $R^4$ to $R^7$ are the same as or different from each other, each representing hydrogen, a C1 to C30 aliphatic hydrocarbon group, a C3 to C30 alicyclic hydrocarbon group, a C5 to C30 aromatic hydrocarbon group, or a heterocyclic

group having 3 to 30 ring member atoms.

**2.** The rubber composition for a tire according to claim 1, which is used for a tread.

**3.** A pneumatic tire produced using the rubber composition according to claim 1 or 2.

**INTERNATIONAL SEARCH REPORT**

International application No.
PCT/JP2011/075667

A. CLASSIFICATION OF SUBJECT MATTER
*C08L9/06*(2006.01)i, *B60C1/00*(2006.01)i, *C08F236/10*(2006.01)i, *C08K3/36* (2006.01)i, *C08K5/36*(2006.01)i, *C08L15/00*(2006.01)i

According to International Patent Classification (IPC) or to both national classification and IPC

B. FIELDS SEARCHED

Minimum documentation searched (classification system followed by classification symbols)
C08L9/00-21/00, B60C1/00, C08F236/10, C08K3/36, C08K5/36

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-116556 A (Sumitomo Rubber Industries, Ltd.), 27 May 2010 (27.05.2010), claims 1, 3; paragraphs [0006], [0042], [0043]; table 3 (Family: none) | 1-3 |
| A | JP 2010-116554 A (Sumitomo Rubber Industries, Ltd.), 27 May 2010 (27.05.2010), claims 1, 3; paragraphs [0001], [0042], [0043]; table 3 (Family: none) | 1-3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>01 February, 2012 (01.02.12) | Date of mailing of the international search report<br>14 February, 2012 (14.02.12) |
| Name and mailing address of the ISA/<br>Japanese Patent Office<br>Facsimile No. | Authorized officer<br><br>Telephone No. |

Form PCT/ISA/210 (second sheet) (July 2009)

INTERNATIONAL SEARCH REPORT

International application No. PCT/JP2011/075667

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-116545 A (Sumitomo Rubber Industries, Ltd.), 27 May 2010 (27.05.2010), claims 1, 7, 8; paragraphs [0001], [0047], [0048]; tables 4, 5 & US 2010/0099810 A1 & EP 2177562 A2 & CN 101724127 A | 1-3 |
| A | JP 2010-116546 A (Sumitomo Rubber Industries, Ltd.), 27 May 2010 (27.05.2010), claims 1, 4; paragraphs [0006], [0045]; table 1 & US 2010/0099795 A1 & EP 2184318 A2 & CN 101724185 A | 1-3 |
| A | WO 2009/072350 A1 (Sumitomo Rubber Industries, Ltd.), 11 June 2009 (11.06.2009), claim 1; paragraphs [0015], [0059] & US 2010/0224299 A1 & DE 112008003328 T & CN 101883818 A | 1-3 |
| A | JP 2008-111012 A (Toyo Tire and Rubber Co., Ltd.), 15 May 2008 (15.05.2008), claims 1, 2; paragraphs [0017], [0019] & US 2008/0103246 A1 & US 2009/0078348 A1 & DE 102007050625 A | 1-3 |
| A | JP 2010-077217 A (Sumitomo Rubber Industries, Ltd.), 08 April 2010 (08.04.2010), claims 1, 4; paragraphs [0007], [0023], [0039]; table 1 (Family: none) | 1-3 |
| A | JP 2008-138081 A (The Yokohama Rubber Co., Ltd.), 19 June 2008 (19.06.2008), claim 1; paragraph [0001]; example 15 & US 2008/0132608 A1 & EP 1939014 A2 & CN 101190978 A | 1-3 |
| A | JP 2007-186644 A (The Yokohama Rubber Co., Ltd.), 26 July 2007 (26.07.2007), claims 1, 2; paragraph [0001]; example 5 (Family: none) | 1-3 |
| A | JP 2005-263892 A (Sumitomo Rubber Industries, Ltd.), 29 September 2005 (29.09.2005), claim 1; paragraphs [0006], [0012]; table 1 (Family: none) | 1-3 |

Form PCT/ISA/210 (continuation of second sheet) (July 2009)

**INTERNATIONAL SEARCH REPORT**

International application No.
PCT/JP2011/075667

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-084485 A (The Yokohama Rubber Co., Ltd.), 23 April 2009 (23.04.2009), claim 1; paragraphs [0001], [0012]; table 1 (Family: none) | 1-3 |
| A | JP 2004-256792 A (Bridgestone Corp.), 16 September 2004 (16.09.2004), claims 1, 10; paragraphs [0001], [0025], [0034]; example 9 & US 2004/0220351 A1 & EP 1445277 A1 & DE 602004018856 D & ES 2318243 T | 1-3 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003192842 A
- JP 2010116545 A
- JP 2010116546 A